# EUROPEAN PATENT SPECIFICATION

(11) **EP 4 417 468 B1**
(45) Date of publication and mention of the grant of the patent: **18.02.2026**
(21) Application number: 22880708.7
(22) Date of filing: 14.09.2022
(51) Int. Cl.: B60Q 1/26, B60Q 1/34, F21V 23/00, F21Y 115/10, F21Y 115/30, F21V 14/04, F21S 43/14, F21S 43/237, F21S 43/241, F21S 43/245, F21S 43/249, F21S 43/27, F21W 103/20, F21W 103/45, F21W 103/60, B60Q 1/00, F21S 43/20, F21S 41/25

(54) **LAMP UNIT**
LAMPENEINHEIT
UNITÉ DE LAMPE

(30) Priority: 13.10.2021 JP 2021168260
(43) Date of publication of application: 21.08.2024
(73) Proprietor: KOITO MANUFACTURING CO., LTD., Minato-ku, Tokyo, 108-8711 (JP)
(72) Inventor: KANEZUKA, Shohei, Shizuoka-shi, Shizuoka 424-8764 (JP); KITAZAWA, Yukiko, Shizuoka-shi, Shizuoka 424-8764 (JP)
(74) Representative: Cabinet Beau de Loménie
(86) International application number: PCT/JP2022/034401
(87) International publication number: WO 2023/063012

(56) References cited:
- WO-A1-2016/051490
- WO-A1-2019/044404
- DE-A1- 102013 104 590
- JP-A- 2016 091 846
- JP-A- 2016 193 689
- JP-B2- 6 216 216
- JP-B2- 6 737 644
- US-A1- 2013 343 074

## Description

### TECHNICAL FIELD

The present invention relates to a lamp unit for a vehicle.

### BACKGROUND ART

As a vehicular lamp, for example, a turn signal lamp or a road surface drawing lamp that notifies the surroundings of a vehicle of an operation such as a right or left turn of the vehicle is known. Patent Literature 1 discloses a vehicle including a turn signal lamp and a road surface drawing lamp that draws a predetermined image on a road surface.
Patent Literature 2 discloses an optical system unit and vehicular lamp.

### CITATION LIST

### PATENT LITERATURE

Patent Literature 1: WO2019/044404A1
Patent Literature 2: US2013343074A1

### SUMMARY OF INVENTION

### TECHNICAL PROBLEM

It has been studied to draw an image (light pattern) on the road surface by the road surface drawing lamp while turning on the turn signal lamp at the time of right or left turn of the vehicle. However, a lens of the turn signal lamp, which is required to widely emit light laterally outward the vehicle, and a lens of the road surface drawing lamp, which draws the light pattern on the road surface, are required to have different optical characteristics. Therefore, a shape of the lens of the turn signal lamp is different from a shape of the lens of the road surface drawing lamp, and thus the turn signal lamp and the road surface drawing lamp have to be separately provided. Therefore, when both the turn signal lamp and the road surface drawing lamp are turned on, bright points may be generated at distant positions, resulting in a lack of uniformity in design.

An object of the present invention is to provide a lamp unit having a design property with a sense of unity even when both a lamp that performs road surface drawing and a lamp that does not perform road surface drawing are turned on.

### SOLUTION TO PROBLEM

A lamp unit according to the present invention is defined in claim 1.

According to the above-described configuration, the lamp unit includes: the first lamp including the first light source portion and the optical unit; and the second lamp including: the second light source portion, at least a part of the second lamp being configured to be turned on when the first light source portion is turned on; and the lens, the second lamp being configured to draw the light pattern on the road surface. The lens of the second lamp, which contacts the end of the optical unit of the first lamp which is a boundary portion between the first lamp and the second lamp, includes a light intake portion. When both the first light source portion and the second light source portion are turned on, both the light from the first light source portion and the light from the second light source portion are incident on the lens of the second lamp, and thus the boundary portion between the first lamp and the second lamp is not conspicuous. Therefore, even when both the first lamp and the second lamp are turned on, the lamp unit according to the above-described configuration has a design property with a sense of unity.

### ADVANTAGEOUS EFFECTS OF INVENTION

According to the present invention, it is possible to provide a lamp unit for a vehicle having a design property with a sense of unity even when both a lamp that performs road surface drawing and a lamp that does not perform road surface drawing are turned on.

### BRIEF DESCRIPTION OF DRAWINGS

[FIG. 1] FIG. 1 is a top perspective view of a vehicular lamp including a lamp unit according to a first embodiment.
[FIG. 2] FIG. 2 is an exploded perspective view of the vehicular lamp including the lamp unit according to the first embodiment.
[FIG. 3] FIG. 3 is a front view illustrating a peripheral portion of a lens provided in a road surface drawing lamp in the lamp unit according to the first embodiment.
[FIG. 4] FIG. 4 is a cross-sectional view illustrating the peripheral portion of the lens provided in the road surface drawing lamp in the lamp unit according to the first embodiment.
[FIG. 5] FIG. 5 is a front view of a lamp unit different from that of the present embodiment when the lamp unit is turned on.
[FIG. 6] FIG. 6 is a front view of the lamp unit according to the first embodiment when the lamp unit is turned on.
[FIG. 7] FIG. 7 is a diagram illustrating a lens according to a modification of the first embodiment.
[FIG. 8] FIG. 8 is a timing chart related to turning on and off of a turn signal lamp and the road surface drawing lamp.
[FIG. 9] FIG. 9 is a front view of a lamp unit according to a second embodiment.
[FIG. 10] FIG. 10 is a cross-sectional view of the lamp unit according to the second embodiment.
[FIG. 11] FIG. 11 is a front view of a lamp unit according to a third embodiment.
[FIG. 12] FIG. 12 is a cross-sectional view of the lamp unit according to the third embodiment.

### DESCRIPTION OF EMBODIMENTS

Hereinafter, embodiments of the present invention (hereinafter, referred to as the present embodiment) will be described with reference to the drawings. The dimensions of the members illustrated in the drawings may be different from the actual dimensions of the members for convenience of description.

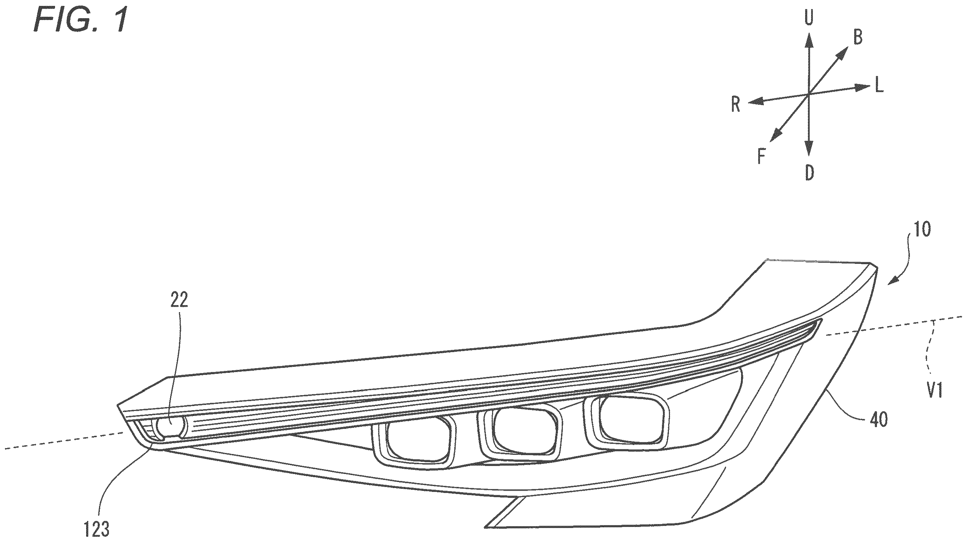

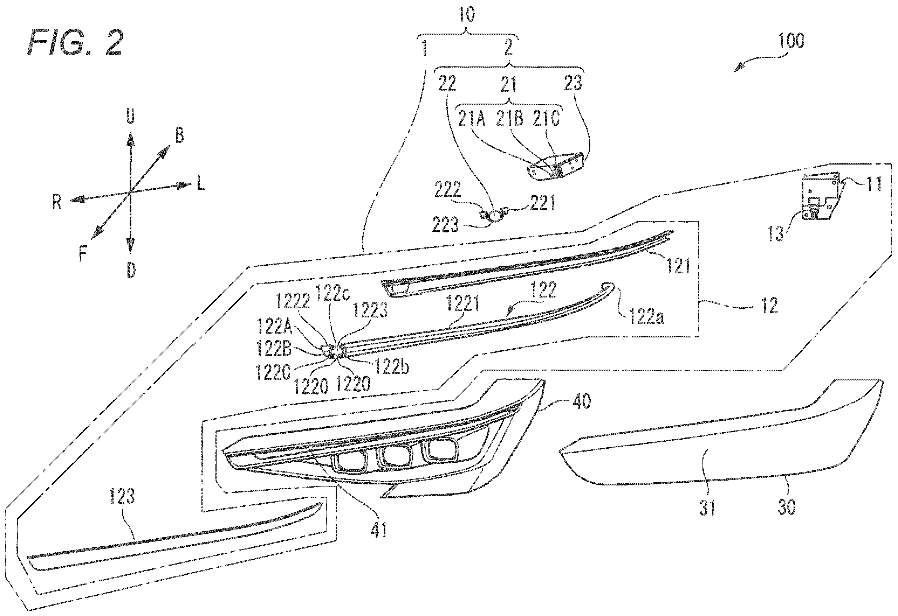

In the description of the present embodiment, for convenience of description, a "left-right direction", an "upper-lower direction", and a "front-rear direction" may be referred to as appropriate. These directions are relative directions set for a lamp unit 10 illustrated in FIG. 1 and a vehicular lamp 100 illustrated in FIG. 2. Here, the "left-right direction" is a direction including a "left direction" and a "right direction". The "upper-lower direction" is a direction including an "upper direction" and a "lower direction". The "front-rear direction" is a direction including a "front direction" and a "rear direction". The front-rear direction is a direction orthogonal to the left-right direction and the upper-lower direction. In the drawings, a reference numeral U denotes the upper direction. A reference numeral D denotes the lower direction. A reference numeral F denotes the front direction. A reference numeral B indicates the rear direction. A reference numeral L denotes the left direction. A reference numeral R denotes the right direction.

### (First Embodiment)

First, the vehicular lamp 100 including the lamp unit 10 according to the present embodiment will be described below with reference to FIGS. 1 and 2. For convenience of description, an outer cover 30 is not shown in FIG. 1. The vehicular lamp 100 is mounted on a vehicle such as an automatic vehicle. The automatic vehicle may be a manually driven vehicle or an automatically driven vehicle. The vehicular lamp 100 illustrated in FIG. 2 is a vehicular lamp disposed on a front left side of the vehicle, and a vehicular lamp similar to the vehicular lamp 100 is disposed on a front right side of the vehicle. As illustrated in FIG. 2, the vehicular lamp 100 includes the lamp unit 10, the outer cover 30, and an extension 40. The lamp unit 10 includes a turn signal lamp 1 (an example of a first lamp) and a road surface drawing lamp 2 (an example of a second lamp). The details of the turn signal lamp 1 and the road surface drawing lamp 2 will be described later.

The outer cover 30 is formed of a transparent member having transparency. Examples of such a transparent member include resin materials such as glass, acrylic resin, epoxy resin, and polycarbonate. The outer cover 30 has a substantial U-shape in a plan view. The outer cover 30 is slightly larger than the extension 40. The outer cover 30 covers the lamp unit 10. The turn signal lamp 1 and the road surface drawing lamp 2 are disposed behind the outer cover 30.

The extension 40 is formed of a resin material such as acrylic resin, epoxy resin, and polycarbonate. The extension 40 has a substantial U-shape in the plan view. The extension 40 has a plurality of holes including a hole 41. The plurality of holes allow light to pass through. On the other hand, a portion of the extension 40, which is not a hole, shields light.

Next, the turn signal lamp 1 and the road surface drawing lamp 2 will be described. The turn signal lamp 1 is a lamp for causing drivers of other vehicles located in front of and behind the vehicle on which the vehicular lamp 100 is mounted to know the turning, course change, and the like of the vehicle. The turn signal lamp 1 includes a first light source portion 11, an optical unit 12, and a first control unit 13.

The first light source portion 11 includes one or more light sources, a circuit board, and a base plate. The light source includes, for example, a light emitting diode (LED) element or a laser diode (LD) element. The light sources are disposed, for example, on the circuit board. The circuit board is mounted on the base plate. The circuit board and the base plate are formed of aluminum or an aluminum alloy having excellent thermal conductivity. The base plate functions as, for example, a heat sink that radiates heat emitted from the light sources to the outside of the first light source portion 11. The first light source portion 11 emits light to the optical unit 12. The first light source portion 11 may be covered with a cover formed of a resin material or the like.

The optical unit 12 includes a reflector 121, a light guide unit 122, and an inner lens 123. The reflector 121 is formed of a transparent resin such as acrylic. The reflector 121 extends in a longitudinal direction (the left-right direction in FIG. 2) of the lamp unit 10. That is, the reflector 121 has a horizontally long shape.

The light guide unit 122 extends in the longitudinal direction (the left-right direction in FIG. 2) of the lamp unit 10. That is, the light guide unit 122 has a horizontally long shape. The light guide unit 122 includes three light guides 122A to 122C. The light guides 122A to 122C may be implemented by, for example, a light pipe or a light guide plate configured such that incident light is repeatedly totally reflected inside.

The light guide unit 122 includes a main body portion 1221 and an extension portion 1222. The extension portion 1222 is arranged on a right side of the main body portion 1221. A hollow portion 1223 is provided between the main body portion 1221 and the extension portion 1222. The first light source portion 11 is disposed in the vicinity of a first end 122a located on a left side of the main body portion 1221. The road surface drawing lamp 2 is disposed in the vicinity of a second end 122b located on a right side of the main body portion 1221 and a third end 122c located on a left side of the extension portion 1222.

When the light is emitted from the first light source portion 11, the light emitted from the first light source portion 11 is incident on the main body portion 1221 of the light guide unit 122. The light incident on the main body portion 1221 is repeatedly totally reflected inside the main body portion 1221, and is guided in a direction (the left-right direction in FIG. 2) in which the light guide unit 122 extends. In this manner, the light emitted from the first light source portion 11 causes the entire light guide unit 122 to emit light.

The inner lens 123 is formed of, for example, a material having transparency such as a transparent resin such as acrylic. The inner lens 123 has a shape along an inner surface of the outer cover 30. In addition, the inner lens 123 has a shape corresponding to the hole 41 of the extension 40. In the present embodiment, the inner lens 123 extends in the longitudinal direction (the left-right direction in FIG. 2) of the lamp unit 10. That is, the inner lens 123 has a horizontally long shape. The inner lens 123 can be visually recognized from the outside through a window 31 of the outer cover 30.

As described above, all the reflector 121, the light guide unit 122, and the inner lens 123 have a horizontally long shape extending in the longitudinal direction (the left-right direction in FIG. 2) of the lamp unit 10. In the present embodiment, the optical unit 12 extends along a virtual line V1 (see FIG. 1) extending in an extending direction (the left-right direction in FIG. 2) of the turn signal lamp 1.

The first control unit 13 includes, for example, an electronic control unit (ECU). The electronic control unit includes a processor such as a central processing unit (CPU), a read only memory (ROM) in which various lamp control programs are stored, and a random access memory (RAM) in which various types of lamp control data are temporarily stored. The processor loads, on the RAM, a program designated from various lamp control programs stored in the ROM and executes various types of processing in cooperation with the RAM. The first control unit 13 controls the turn signal lamp 1.

The road surface drawing lamp 2 includes a second light source portion 21, a lens 22, and a second control unit 23. The road surface drawing lamp 2 draws a light pattern on a road surface around the vehicle on which the vehicular lamp 100 is mounted by projecting light emitted from the second light source portion 21 onto the road surface via the lens 22. The road surface drawing lamp 2 may include a light-shielding portion that shields a part of the light emitted from the second light source portion 21 and draws the light pattern on the road surface.

The second light source portion 21 includes a first light source 21A, a second light source 21B, and a third light source 21C. The first light source 21A, the second light source 21B, and the third light source 21C may be implemented by, for example, an LED element or an LD element similar to the light sources provided in the first light source portion 11. In the present embodiment, when the first light source portion 11 is turned on, one of the first light source 21A, the second light source 21B, and the third light source 21C is turned on. The second light source portion 21 further includes a circuit board and a heat sink. For example, the circuit board provided in the second light source portion 21 may be the same as the circuit board provided in the first light source portion 11. The heat sink provided in the second light source portion 21 is formed of, for example, a metal member containing aluminum nitride or the like, and a resin member containing a filler such as talc.

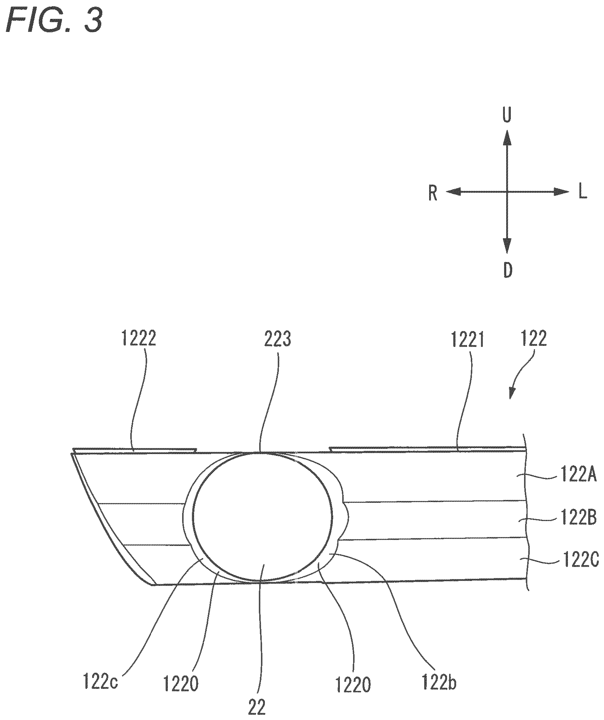

The lens 22 is formed of, for example, a material having transparency such as a transparent resin such as acrylic or glass. The lens 22 is located on the virtual line V1 (see FIG. 1). As illustrated in FIG. 2, the lens 22 includes a first attachment portion 221, a second attachment portion 222, and an outer peripheral edge 223. The first attachment portion 221 and the second attachment portion 222 are, for example, attachment legs for attaching the lens 22 to the circuit board of the second light source portion 21. The first attachment portion 221 is provided on a left side of the lens 22. The second attachment portion 222 is provided on a right side of the lens 22. The outer peripheral edge 223 in a front view has a substantially circular shape (see FIG. 3). As illustrated in FIG. 2, a diameter of the lens 22 is smaller than a length of the reflector 121 in the longitudinal direction (the left-right direction in FIG. 2) and a length of the light guide unit 122 in the longitudinal direction (the left-right direction in FIG. 2).

As illustrated in FIGS. 1 and 2, in the front view of the vehicular lamp 100, the lens 22 is covered by the inner lens 123, and the lens 22 is not covered by the reflector 121 and the light guide unit 122. The lens 22 is disposed in front of the second light source portion 21. The lens 22 is disposed in the hollow portion 1223 of the light guide unit 122. The light emitted from the second light source portion 21 is incident on the lens 22. The light incident on the inner lens 123 is refracted by the inner lens 123, thereby being emitted to a desired position in the vicinity of the vehicle on which the vehicular lamp 100 is mounted. In this manner, a light pattern is formed at the desired position in the vicinity of the vehicle on which the vehicular lamp 100 is mounted.

The second control unit 23 may have the same hardware configuration as the first control unit 13. The second control unit 23 controls the road surface drawing lamp 2.

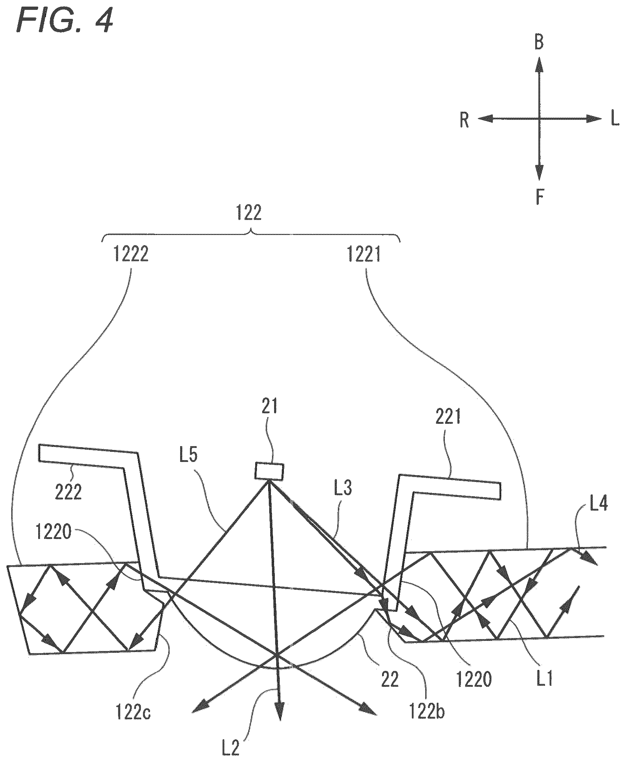

Next, a state of a peripheral portion of the lens 22 provided in the road surface drawing lamp 2 when the lamp unit 10 is turned on will be described with reference to FIGS. 3 and 4. As illustrated in FIG. 3, the lens 22 contacts the second end 122b and the third end 122c of the light guide unit 122. In other words, the light guide unit 122 covers a part of the outer peripheral edge 223 of the lens 22 (specifically, a portion of the outer peripheral edge 223 other than an upper end and a lower end of the lens 22) in the front view. In addition, the second end 122b and the third end 122c have shapes (that is, a shape of the second end 122b and a shape of the third end 122c) that are smoothly continuous and/or changed with the lens 22.

FIG. 4 is a cross-sectional view illustrating a peripheral portion of the lens 22 provided in the road surface drawing lamp 2 in the lamp unit 10. FIG. 4 illustrates a state in which both the turn signal lamp 1 and the road surface drawing lamp 2 are turned on. In addition, FIG. 4 illustrates a plurality of lights L1 to L5. The light L1 is light emitted from the first light source portion 11 (see FIG. 2) of the turn signal lamp 1. The lights L2 to L5 are light emitted from the second light source portion 21 of the road surface drawing lamp 2.

As illustrated in FIG. 4, the second end 122b located on the main body portion 1221 is located in front of the first attachment portion 221 of the lens 22 and covers the first attachment portion 221. The third end 122c located on the extension portion 1222 is located in front of the second attachment portion 222 of the lens 22 and covers the second attachment portion 222.

Each of the second end 122b and the third end 122c is provided with a light intake portion 1220 for making a part of the light emitted from the road surface drawing lamp 2 incident on the light guide unit 122. The light intake portion 1220 is located in front of the second light source portion 21. When the light is emitted from the second light source portion 21 of the road surface drawing lamp 2, a part of the light emitted from the second light source portion 21 is incident on the light guide unit 122 via the light intake portion 1220. A part of the light emitted from the second light source portion 21 may be incident on both the main body portion 1221 and the extension portion 1222 of the light guide unit 122, or may be incident on only one of the main body portion 1221 and the extension portion 1222. The light incident on the light guide unit 122 is repeatedly totally reflected inside the light guide unit 122. In this manner, the light guide unit 122 guides a part of the light emitted from the second light source portion 21 in a direction (the left-right direction in FIG. 4) in which the light guide unit 122 extends.

The light L1 emitted from the first light source portion 11 of the turn signal lamp 1 travels from the left side to the right side of the main body portion 1221 while being repeatedly totally reflected inside the main body portion 1221 of the light guide unit 122, and is incident on the lens 22. The light L1 incident on the lens 22 is emitted to the front outside of the vehicular lamp 100. In this manner, the light L1 causes the entire light guide unit 122 to emit light. The light emitted rearward from the light guide unit 122 is reflected forward by the reflector 121.

The light L2 emitted from the second light source portion 21 to the front (that is, forward in FIG. 4) is incident on the lens 22. The light L2 incident on the lens 22 is emitted to the front outside of the vehicular lamp 100.

The light L3 emitted obliquely leftward and forward from the second light source portion 21 is incident on the main body portion 1221 of the light guide unit 122 via the light intake portion 1220. When the light L3 is incident on the main body portion 1221, the light L3 is repeatedly totally reflected inside the main body portion 1221 and causes the entire main body portion 1221 to emit light.

The light L4 emitted obliquely leftward and forward from the second light source portion 21 is refracted by the first attachment portion 221, and then is incident on the main body portion 1221 of the light guide unit 122 via the light intake portion 1220. When the light L4 is incident on the main body portion 1221, the light L4 is repeatedly totally reflected inside the main body portion 1221 and causes the entire main body portion 1221 to emit light.

The light L5 emitted obliquely rightward and forward from the second light source portion 21 is incident on the extension portion 1222 of the light guide unit 122 via the light intake portion 1220. When the light L5 incident on the extension portion 1222, the light L5 is repeatedly totally reflected inside the extension portion 1222 and causes the entire extension portion 1222 to emit light.

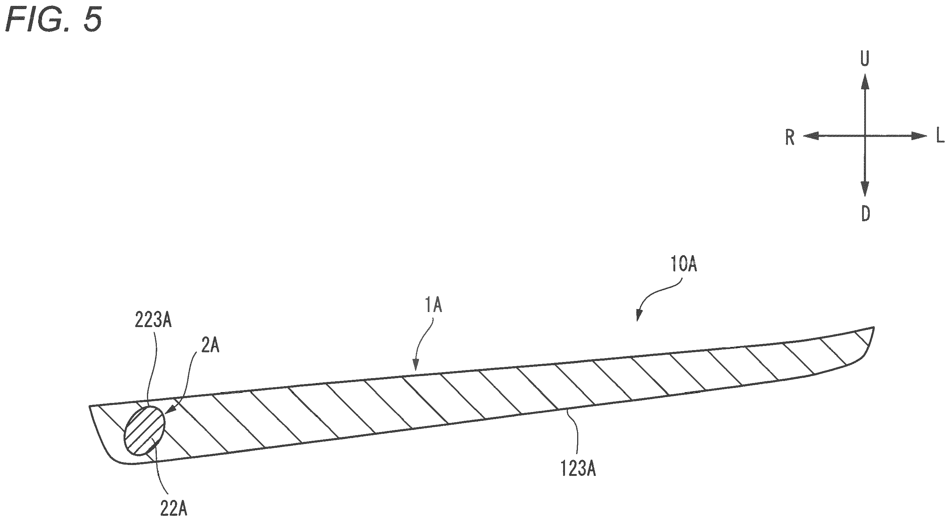

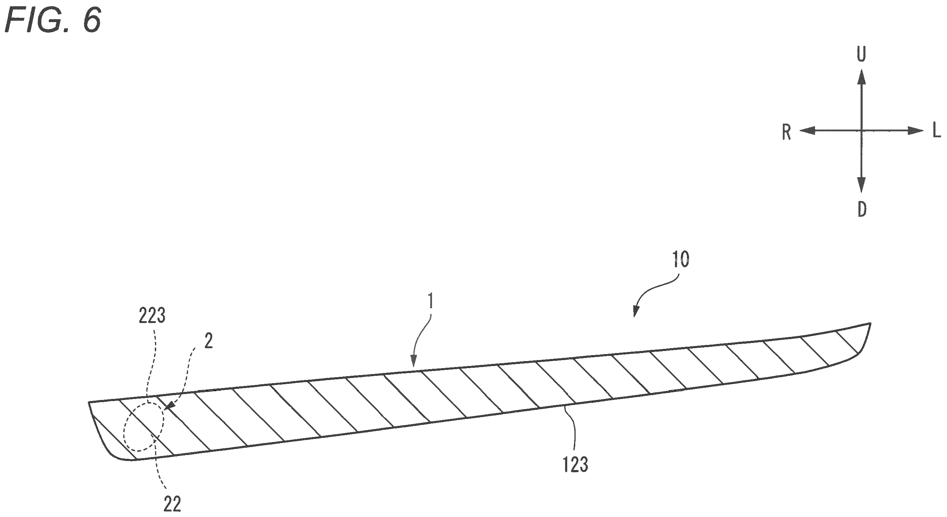

Next, a difference between a state in which a lamp unit 10A according to a reference example different from the present embodiment is turned on and a state in which the lamp unit 10 according to the present embodiment is turned on will be described with reference to FIGS. 5 and 6. In the present embodiment, it is assumed that an emission color of the turn signal lamp 1 and an emission color of the road surface drawing lamp 2 are the same. When the emission color of the turn signal lamp 1 and the emission color of the road surface drawing lamp 2 are the same, there is a sense of unity in color, and thus the uniformity of the design of the lamp unit 10 is likely to be maintained as compared with a case in which the emission colors are different. FIG. 5 is a front view of the lamp unit 10A when the lamp unit 10A is turned on. FIG. 6 is a front view of the lamp unit 10 according to the present embodiment when the lamp unit 10 is turned on. In FIGS. 5 and 6, each region of light visible to human eyes is hatched. A person visually recognizes that a hatched region indicated by diagonal lines extending from the upper left to the lower right is different from a hatched region indicated by diagonal lines extending from the upper right to the lower left.

In the lamp unit 10A according to the reference example illustrated in FIG. 5, a light guide unit of a turn signal lamp 1A is not provided with a light intake portion that takes in light emitted from a second light source portion of a road surface drawing lamp 2A. Therefore, only light emitted from a first light source portion of the turn signal lamp 1A causes the light guide unit of the turn signal lamp 1A to emit light, and only the light emitted from the second light source portion of the road surface drawing lamp 2A causes a lens 22A to emit light. That is, the light guide unit of the turn signal lamp 1A and the lens 22A are provided as separate optical members, and the light emitted from the second light source portion of the road surface drawing lamp 2A is incident on the light guide unit, and the light emitted from the first light source portion of the turn signal lamp 1A is not incident on the lens 22A, and thus an optical path is disconnected between the light guide unit of the turn signal lamp 1A and the lens 22A. Therefore, it seems to a person who visually recognizes the lamp unit 10A from the front as if there is a boundary between the light guide unit of the turn signal lamp 1A and the lens 22A.

In order to implement a design property with a sense of unity, it is conceivable to align the hue, the luminance, and the like of the light of the first light source portion and the light of the second light source portion, but it is difficult to make the light of the first light source portion and the light of the second light source portion completely the same. Therefore, it seems to the person who visually recognizes the lamp unit 10A from the front as if the hue or the brightness of the light guide unit of the turn signal lamp 1A and the hue or the brightness of the lens 22A are different. For this reason, the lamp unit 10A according to the reference example illustrated in FIG. 5 is less likely to implement the design property with a sense of unity.

On the other hand, as illustrated in FIG. 6, in the lamp unit 10 according to the present embodiment, the lens 22 of the road surface drawing lamp 2 contacts the second end 122b and the third end 122c of the light guide unit 122 of the turn signal lamp 1. That is, when there is no gap or there is a small gap between the lens 22 and the light guide unit 122, it is less likely to seem as if there is a boundary between the road surface drawing lamp 2 and the turn signal lamp 1 in the front view of the lamp unit 10.

Each of the second end 122b and the third end 122c of the light guide unit 122 is provided with the light intake portion 1220 that takes in the light emitted from the second light source portion 21 of the road surface drawing lamp 2. Therefore, both the light of the first light source portion 11 of the turn signal lamp 1 and the light of the second light source portion 21 of the road surface drawing lamp 2 enter the light guide unit 122. That is, an optical path that is incident on the light guide unit 122 from the lens 22 is present between the two, and thus it is less likely to seem as if there is a boundary between the lens 22 and the light guide unit 122.

The light guide unit 122 is illuminated with the light emitted from the first light source portion 11 and the light emitted from the second light source portion 21. That is, the light guide unit 122 is illuminated in a manner of mixing the hue or the luminance of the light emitted from the first light source portion 11 and the hue or the luminance of the light emitted from the second light source portion 21. Therefore, even when the hue, the luminance, and the like of the light emitted from the first light source portion 11 and the hue, the luminance, and the like of the light emitted from the second light source portion 21 are not completely the same, it is less likely to seem as if there is a boundary between the lens 22 and the light guide unit 122. For this reason, the lamp unit 10 according to the present embodiment is likely to implement the design property with a sense of unity.

In the reference example illustrated in FIG. 5, a part of the light emitted from the road surface drawing lamp 2A may be emitted to the outside of the lamp unit 10A via an attachment portion (attachment leg) of the lens 22A. That is, so-called leakage light may occur in the lamp unit 10A. In order to prevent the occurrence of leakage light, it is conceivable to provide a light-shielding portion (for example, an extension) in the lamp unit 10A in the vicinity of the outer peripheral edge 223A of the lens 22A provided in the road surface drawing lamp 2A. However, in this case, when both the turn signal lamp 1A and the road surface drawing lamp 2A are turned on, bright points are generated at distant positions. Therefore, in the lamp unit 10A, as illustrated in FIG. 5, the outer peripheral edge 223A of the lens 22A provided in the road surface drawing lamp 2A can be visually recognized clearly in the front view. That is, it does not seem to the person who visually recognizes the lamp unit 10A from the front as if the entire inner lens 123A emits light without a break. Therefore, in the lamp unit 10A, when both the turn signal lamp 1A and the road surface drawing lamp 2A are turned on, the uniformity in the design is lost.

On the other hand, in the lamp unit 10 according to the present embodiment, the second end 122b located on the main body portion 1221 covers the first attachment portion 221 of the lens 22, and the third end 122c located on the extension portion 1222 covers the second attachment portion 222 of the lens 22. Therefore, in the lamp unit 10, it is not necessary to provide a light-shielding portion in the vicinity of the outer peripheral edge 223 of the lens 22. Therefore, in the lamp unit 10, as illustrated in FIG. 6, even when both the turn signal lamp 1 and the road surface drawing lamp 2 are turned on, it seems to the person as if the entire inner lens 123 emits light without a break. Therefore, in the lamp unit 10, when even both the turn signal lamp 1 and the road surface drawing lamp 2 are turned on, the boundary between the turn signal lamp 1 and the road surface drawing lamp 2 is not conspicuous.

According to the lamp unit 10 according to the above-described configuration, the lamp unit 10 includes the turn signal lamp 1 and the road surface drawing lamp 2 that draws a light pattern on the road surface. The turn signal lamp 1 includes the first light source portion 11 and the optical unit 12. The road surface drawing lamp 2 includes the second light source portion 21, at least a part of which is turned on when the first light source portion 11 is turned on, and the lens 22. The lens 22 contacts the second end 122b and the third end 122c of the light guide unit 122, and each of the second end 122b and the third end 122c is provided with the light intake portion 1220. Therefore, even when both the first light source portion 11 and the second light source portion 21 are turned on, a boundary portion between the turn signal lamp 1 and the road surface drawing lamp 2 is not conspicuous. Therefore, even when both the turn signal lamp 1 and the road surface drawing lamp 2 are turned on, the lamp unit 10 has the design property with a sense of unity.

According to the lamp unit 10 according to the above-described configuration, the optical unit 12 extends along the virtual line V1 extending in the extending direction of the turn signal lamp 1, and the lens 22 is located on the virtual line V1. That is, the optical unit 12 and the lens 22 are both located on the virtual line V1, and thus the boundary portion between the turn signal lamp 1 and the road surface drawing lamp 2 is less likely to be conspicuous when both the first light source portion 11 and the second light source portion 21 are turned on. Therefore, even when both the turn signal lamp 1 and the road surface drawing lamp 2 are turned on, the lamp unit 10 has the design property with a sense of unity.

According to the lamp unit 10 according to the above-described configuration, the second end 122b and the third end 122c of the light guide unit 122 have shapes that are smoothly continuous and/or changed with the lens 22. Therefore, the boundary portion between the turn signal lamp 1 and the road surface drawing lamp 2 in the lamp unit 10 is not conspicuous. Therefore, even when both the turn signal lamp 1 and the road surface drawing lamp 2 are turned on, the lamp unit 10 has the design property with a sense of unity.

According to the lamp unit 10 according to the above-described configuration, the light guide unit 122 covers a portion of the outer peripheral edge 223 of the lens 22 other than the upper end and the lower end of the lens 22 in the front view. Therefore, when the lamp unit 10 is visually recognized from the front, the boundary portion between the turn signal lamp 1 and the road surface drawing lamp 2 is not conspicuous. Therefore, even when both the turn signal lamp 1 and the road surface drawing lamp 2 are turned on, the lamp unit 10 has the design property with a sense of unity.

According to the lamp unit 10 according to the above-described configuration, the light intake portion 1220 is provided in the light guide unit 122, and thus the light emitted from the second light source portion 21 toward the light intake portion 1220 is guided to the entire turn signal lamp 1. Therefore, according to the lamp unit 10, the entire turn signal lamp 1 can uniformly emit light, and thus even when both the turn signal lamp 1 and the road surface drawing lamp 2 are turned on, the lamp unit 10 has the design property with a sense of unity.

According to the lamp unit 10 according to the above-described configuration, the inner lens 123 covers the lens 22. Therefore, according to the lamp unit 10, the turn signal lamp 1 and the road surface drawing lamp 2 can uniformly emit light, and thus even when both the turn signal lamp 1 and the road surface drawing lamp 2 are turned on, the lamp unit 10 has the design property with a sense of unity.

According to the lamp unit 10 according to the above-described configuration, the lens 22 is disposed in the hollow portion 1223 provided between the main body portion 1221 and the extension portion 1222. Therefore, when the lamp unit 10 is visually recognized, the boundary portion between the turn signal lamp 1 and the road surface drawing lamp 2 is not conspicuous. Therefore, even when both the turn signal lamp 1 and the road surface drawing lamp 2 are turned on, the lamp unit 10 has the design property with a sense of unity.

### (Modification of First Embodiment)

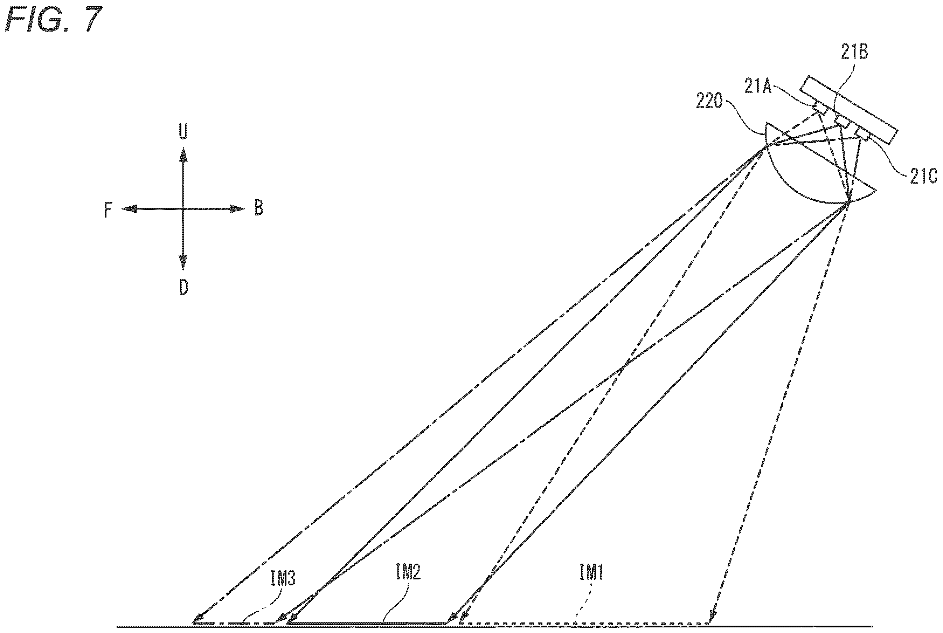

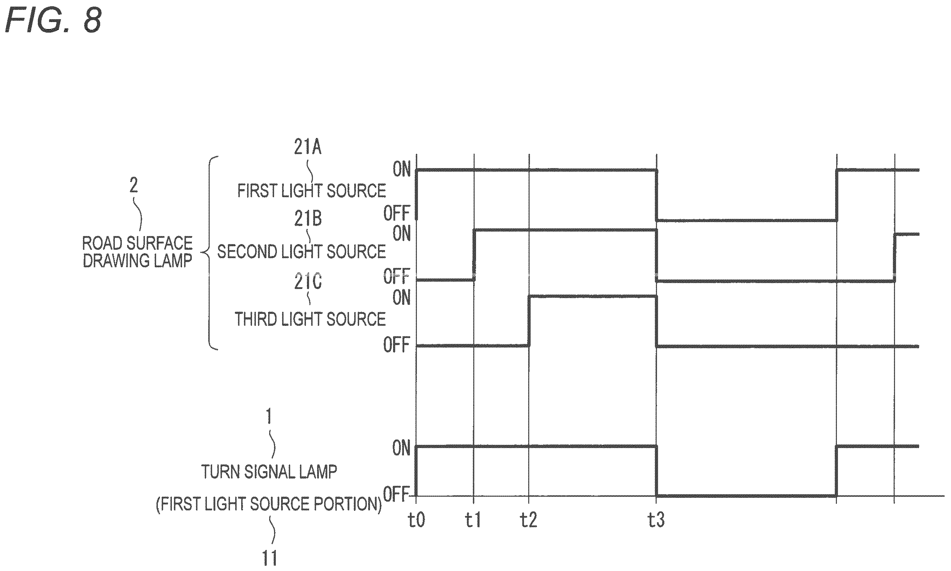

Next, the lamp unit 10 according to a modification of the first embodiment will be described with reference to FIGS. 7 and 8. The present modification is different from the first embodiment in that the road surface drawing lamp 2 includes the lens 220 which is a free-form-surface lens. The free-form-surface lens is a lens in which at least one of an emission surface and an incidence surface is implemented by a free-form surface. In the present modification, the first control unit 13 controls the first light source portion 11 such that the first light source portion 11 is turned on and off at a predetermined cycle. The second control unit 23 controls the second light source portion 21 such that the first light source 21A, the second light source 21B, and the third light source 21C provided in the second light source portion 21 are turned on at predetermined intervals in order, whereby the second light source portion 21 is turned on and off at a predetermined cycle.

As illustrated in FIG. 7, in the present modification, an image IM1 is drawn on the road surface by light emitted from the first light source 21A, an image IM2 is drawn on the road surface by light emitted from the second light source 21B, and an image IM3 is drawn on the road surface by light emitted from the third light source 21C. When a traveling direction of the vehicle on which the vehicular lamp 100 including the lamp unit 10 is mounted is the front direction, the images IM1 to IM3 are drawn on the road surface in the order of the image IM3, the image IM2, and the image IM1 from the front. In addition, the image IM1, the image IM2, and the image IM3 are larger in this order. That is, when the traveling direction of the vehicle on which the vehicular lamp 100 including the lamp unit 10 is mounted is the front direction, an image drawn rearward is larger than an image drawn forward. Sizes of the image IM1, the image IM2, and the image IM3 can be changed as appropriate. The image IM1, the image IM2, and the image IM3 may have the same size, or may be smaller in this order.

Next, a timing of turning on and off the turn signal lamp 1 and the road surface drawing lamp 2 will be described with reference to FIG. 8. A horizontal axis in FIG. 8 represents the elapse of time. Therefore, for example, a time t1 is a time after a time t0. As illustrated in FIG. 8, at the time t0, the first control unit 13 controls the first light source portion 11 to switch the first light source portion 11 from an OFF state to an ON state. Therefore, at the time t0, the first light source portion 11 is in the ON state. On the other hand, at the time t0, the second control unit 23 controls the second light source portion 21 such that the first light source 21A is switched from the OFF state to the ON state, and the second light source 21B and the third light source 21C are kept in the OFF state. Therefore, at the time t0, the first light source 21A is in the ON state, but the second light source 21B and the third light source 21C are in the OFF state.

At the time t1, the first control unit 13 controls the first light source portion 11 to keep the first light source portion 11 in the ON state. Therefore, at the time t1, the first light source portion 11 is in the ON state. On the other hand, at the time t1, the second control unit 23 controls the second light source portion 21 such that the first light source 21A is kept in the ON state, the second light source 21B is switched from the OFF state to the ON state, and the third light source 21C is kept in the OFF state. Therefore, at the time t1, the first light source 21A and the second light source 21B are in the ON state, but the third light source 21C is in the OFF state.

At a time t2, the first control unit 13 controls the first light source portion 11 to keep the first light source portion 11 in the ON state. Therefore, at the time t2, the first light source portion 11 is in the ON state. On the other hand, at the time t2, the second control unit 23 controls the second light source portion 21 such that the first light source 21A and the second light source 21B are kept in the ON state, and the third light source 21C is switched from the OFF state to the ON state. Therefore, at the time t2, the first light source 21A, the second light source 21B, and the third light source 21C are in the ON state.

At a time t3, the first control unit 13 controls the first light source portion 11 to switch the first light source portion 11 from the ON state to the OFF state. Therefore, at the time t3, the first light source portion 11 is in the OFF state. On the other hand, at the time t3, the second control unit 23 controls the second light source portion 21 to switch the first light source 21A, the second light source 21B, and the third light source 21C from the ON state to the OFF state. Therefore, at the time t3, the first light source 21A, the second light source 21B, and the third light source 21C are in the OFF state. The control is repeated at the same interval after the time t3. The control performed after the time t3 is the same as the control performed during a period from the time t0 to the time t3, and thus the description thereof will be omitted.

In this manner, the light is continuously emitted from the turn signal lamp 1 during the period from the time t0 to the time t3. On the other hand, in the road surface drawing lamp 2, during the period from the time t0 to the time t3, the number of light sources emitting light increases sequentially (stepwise). Therefore, a sequential light pattern is drawn on the road surface. The sequential light pattern continuously changes as the light pattern is drawn on the road surface as time elapses. In addition, it seems to a person who visually recognizes the road surface drawing lamp 2 from the front as if the road surface drawing lamp 2 is normally turned on during the period from time t0 to time t3. That is, when the light is emitted from one of the first light source 21A, the second light source 21B, and the third light source 21C, it seems to the person who visually recognizes the road surface drawing lamp 2 from the front as if the road surface drawing lamp 2 is turned on.

Here, when a time during which the light is emitted from the first light source portion 11 is set as a first cycle and a time during which the light is emitted from one of the light sources provided in the second light source portion 21 is set as a second cycle, both the first cycle and the second cycle are periods from the time t0 to the time t3. Therefore, the first cycle and the second cycle are the same. During the period from the time t0 to the time t3, both the turn signal lamp 1 and the road surface drawing lamp 2 are turned on, and at the time t3, both the turn signal lamp 1 and the road surface drawing lamp 2 are turned off. Therefore, it seems to the person who visually recognizes the lamp unit 10 from the front as if the turn signal lamp 1 and the road surface drawing lamp 2 are an integrated lamp.

According to the lamp unit 10 according to the above-described configuration, a cycle of turning on and off the turn signal lamp 1 and a cycle of turning on and off the road surface drawing lamp 2 coincide with each other, and thus it seems to the person who visually recognizes the lamp unit 10 as if the turn signal lamp 1 and the road surface drawing lamp 2 are continuous. Therefore, even when both the turn signal lamp 1 and the road surface drawing lamp 2 are turned on, the lamp unit 10 has the design property with a sense of unity.

### (Second Embodiment)

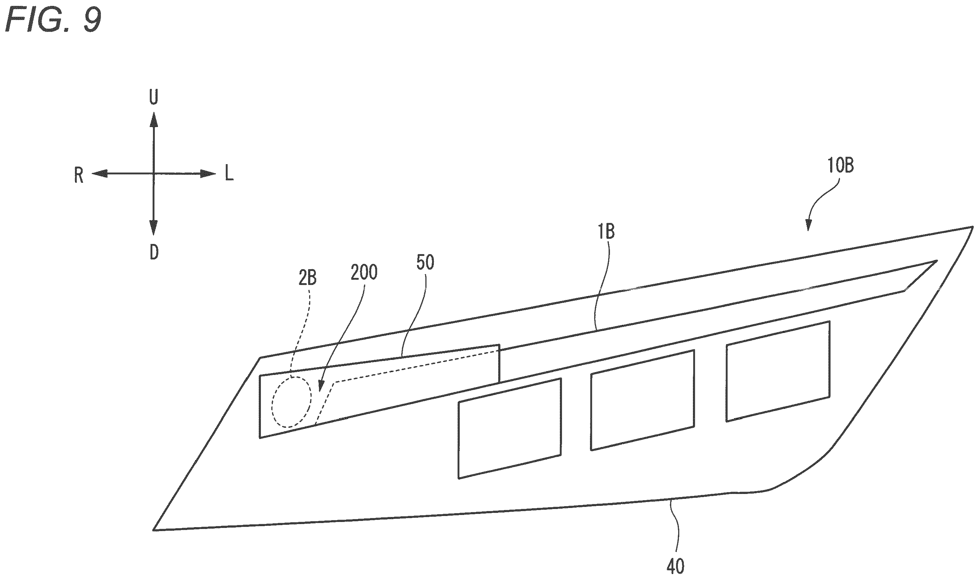

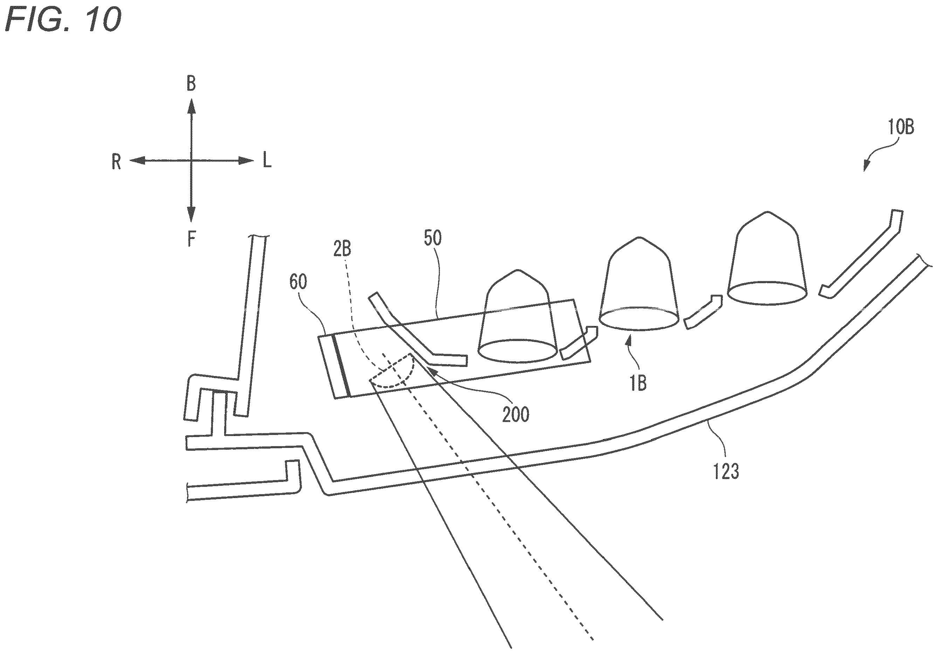

Next, a lamp unit 10B according to a second embodiment will be described with reference to FIGS. 9 and 10. The lamp unit 10B according to the second embodiment includes a turn signal lamp 1B and a road surface drawing lamp 2B. The lamp unit 10B according to the second embodiment is different from the lamp unit 10 according to the first embodiment in that the turn signal lamp 1B and the road surface drawing lamp 2B are not continuous, the road surface drawing lamp 2B is provided with one light source, and a diffusion cover 50 and a reflection member 60 are further included.

The diffusion cover 50 is formed of, for example, a resin material having transparency such as polycarbonate. As illustrated in FIGS. 9 and 10, the diffusion cover 50 has a substantially trapezoidal shape in a front view and has a substantially rectangular shape in a plan view. The diffusion cover 50 covers a part of the turn signal lamp 1B (specifically, a right-side portion of the turn signal lamp 1B) and the road surface drawing lamp 2B.

The reflection member 60 is formed of, for example, a resin material such as polycarbonate, and reflects light emitted from the road surface drawing lamp 2B. As illustrated in FIG. 10, the reflection member 60 is disposed on a right side of the road surface drawing lamp 2B. Therefore, the reflection member 60 reflects the light emitted rightward of the light emitted from the road surface drawing lamp 2B. The light reflected by the reflection member 60 is emitted to the outside of the lamp unit 10B via the inner lens 123.

As illustrated in FIGS. 9 and 10. a gap 200 is present between the turn signal lamp 1B and the road surface drawing lamp 2B, and the gap 200 is covered with the diffusion cover 50. In addition, the light emitted rightward of the light emitted from the road surface drawing lamp 2B is reflected by the reflection member 60 and then emitted to the outside of the lamp unit 10B. Therefore, so-called leakage light hardly occurs in the lamp unit 10B. Therefore, in the lamp unit 10B according to the present embodiment, when the lamp unit 10B is visually recognized, a boundary portion between the turn signal lamp 1B and the road surface drawing lamp 2B is not conspicuous. Therefore, even when both the turn signal lamp 1B and the road surface drawing lamp 2B are turned on, the lamp unit 10B has a design property with a sense of unity.

### (Third Embodiment)

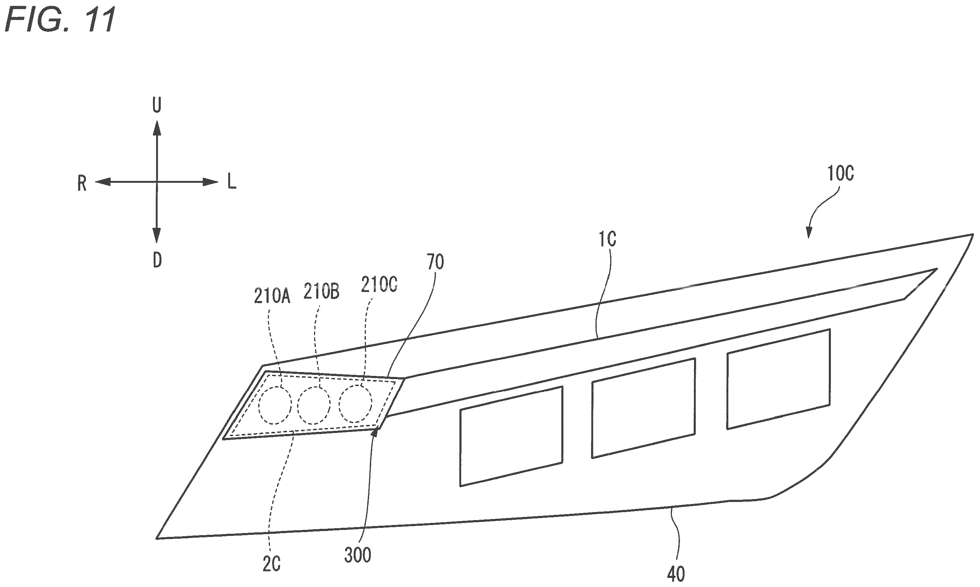

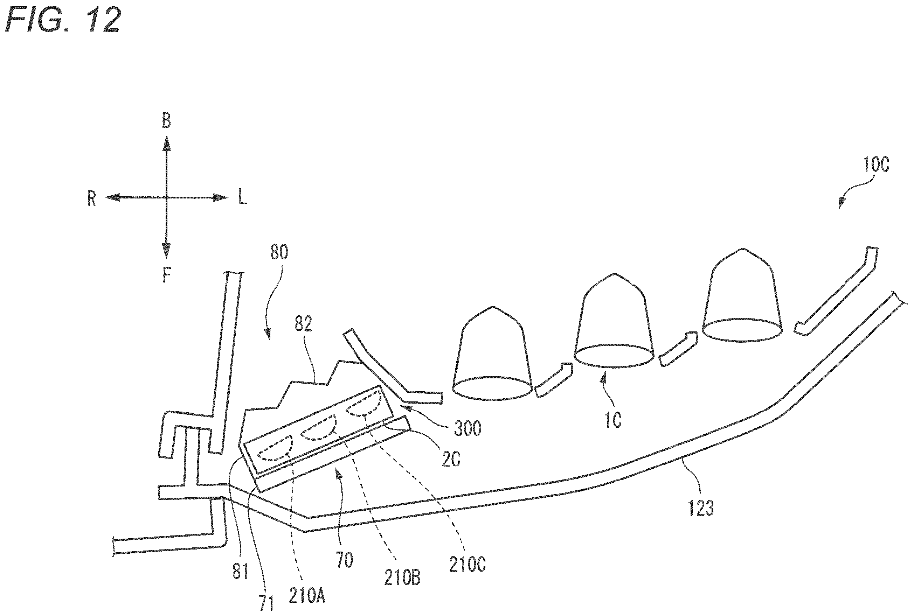

Next, a lamp unit 10C according to a second embodiment will be described with reference to FIGS. 11 and 12. The lamp unit 10C according to the third embodiment includes a turn signal lamp 1C and a road surface drawing lamp 2C. The lamp unit 10C according to the third embodiment is different from the lamp unit 10 according to the first embodiment in that the turn signal lamp 1C and the road surface drawing lamp 2C are not continuous and a smoke lens 70 and a reflector 80 are further provided. The road surface drawing lamp 2C includes a first light source 210A, a second light source 210B, and a third light source 210C.

The smoke lens 70 is a semi-translucent lens. The smoke lens 70 is formed by, for example, applying a dark color such as black to a resin such as an acrylic resin or a polycarbonate resin. As illustrated in FIGS. 11 and 12, the smoke lens 70 has a substantially trapezoidal shape in a front view and has a substantially rectangular shape in a plan view. The smoke lens 70 is disposed in front of the road surface drawing lamp 2C. A length of the smoke lens 70 in a lateral direction (the left-right direction in FIG. 11) is slightly larger than a length of the road surface drawing lamp 2C in a lateral direction.

The reflector 80 may be formed of, for example, a material similar to that of the lamp 2C is reflected by the reflector 80 and then emitted to the outside of the lamp unit 10C. Therefore, so-called leakage light hardly occurs in the lamp unit 10C. Therefore, in the lamp unit 10C according to the present embodiment, when the lamp unit 10C is visually recognized, a boundary portion between the turn signal lamp 1C and the road surface drawing lamp 2C is not conspicuous. Therefore, even when both the turn signal lamp 1C and the road surface drawing lamp 2C are turned on, the lamp unit 10C has a design property with a sense of unity.

Although the embodiments of the present invention have been described above, it is needless to say that the technical scope of the present invention should not be construed as being limited by the description of the present embodiments. The present embodiment is merely an example, and it will be obvious to those skilled in the art that various embodiments can be changed within the scope of the invention described in the claims. The technical scope of the present invention should be defined based on the scope of the invention described in the claims and the scope of equivalents thereof.

In the above-described embodiments, the lamp unit 10 includes the turn signal lamp 1 and the road surface drawing lamp 2, and may also include a backup lamp and the road surface drawing lamp 2. That is, the backup lamp may be employed instead of the turn signal lamp 1. In this case, the backup lamp is an example of the first lamp.

In the above-described embodiments, the light guide unit 122 includes the main body portion 1221 and the extension portion 1222, and may not include the extension portion 1222. In addition, in the above-described embodiments, an example has been described in which the extension portion 1222 and the main body portion 1221 are separate members, and the present invention is not limited thereto. The extension portion 1222 and the main body portion 1221 may be connected to each other above the lens 22 of the road surface drawing lamp 2. Alternatively, the extension portion 1222 and the main body portion 1221 may be connected to each other below the lens 22 of the road surface drawing lamp 2.

In the above-described embodiments, the light guide unit 122 covers a part of the outer peripheral edge 223 of the lens 22 in the front view, and may cover the entire outer peripheral edge 223 of the lens 22. That is, the main body portion 1221 and the extension portion 1222 of the light guide unit 122 may be separated or may be continuous.

In the above-described embodiments, the light guide unit 122 includes the three light guides 122A to 122C, and may include one or two light guides, or may include four or more light guides.

In the above-described embodiments, the lamp unit 10 includes the first control unit 13 and the second control unit 23, and may include a single control unit that controls the first light source portion 11 and the second light source portion 21.

In the above-described embodiments, at least a part of a surface of the reflector 121 may be subjected to metal vapor deposition such as aluminum.

In the above-described embodiments, the road surface drawing lamp 2 is configured such that the light emitted from the second light source portion 21 forms a predetermined image via the lens 22. The light emitted from the second light source portion 21 is projected onto the road surface around the vehicle on which the vehicular lamp 100 is mounted, whereby the light pattern including the predetermined image is drawn on the road surface. However, the present invention is not limited thereto. The road surface drawing lamp 2 may be, for example, a laser scanning device including a laser light source and a light deflector that deflects laser light emitted from the laser light source. In this case, the light deflector is, for example, a movable mirror such as a micro electro mechanical systems (MEMS) mirror or a galvano mirror. In addition, in this case, the road surface drawing lamp 2 draws the light pattern on the road surface around the vehicle on which the vehicular lamp 100 is mounted by, for example, performing scanning with the laser light.

## Claims

1. A lamp unit (10;10B;10C) for a vehicle comprising:
a first lamp (1;1B;1C) comprising a first light source portion (11) and an optical unit (12), the optical unit (12) comprising a light guide unit (122); and
a second lamp (2;2B;2C) comprising: a second light source portion (21), and a projection lens (22), the second lamp being configured to draw via the projection lens (22) a light pattern with a predetermined image on a road surface,
the lamp unit being **characterized in that**:
at least a part of the second lamp being configured to be turned on when the first light source portion (11) is turned on;
wherein the projection lens (22) is provided to contact an end of the optical unit (12), and
wherein a portion of the light guide unit (122) of the optical unit (12), the portion of the light guide unit (122) of the optical unit (12) contacting the lens, is provided with a light intake portion (1220) configured to cause light emitted from the second light source portion via the projection lens (22) to be incident on the light guide unit (122) of the optical unit (12).

2. The lamp unit for a vehicle according to claim 1,
wherein the optical unit (12) extends along a virtual line (V1) extending in an extending direction of the first lamp in a front view, and
wherein the lens (22) is located on the virtual line.

3. The lamp unit for a vehicle according to claim 1 or 2,
wherein the end (122b,122c) of the optical unit (12) has a shape that is smoothly continuous or changed with the lens (22).

4. The lamp unit for a vehicle according to claim 1 or 2,
wherein the optical unit (12) covers at least a part of an outer peripheral edge of the lens (22) in the front view.

5. The lamp unit for a vehicle according to claim 1 or 2,
wherein the optical unit (12) comprises a light guide unit (122), and
wherein the light intake portion (1220) is provided in the light guide unit.

6. The lamp unit for a vehicle according to claim 1 or 2,
wherein the optical unit (12) comprises an inner lens (123), and
wherein the inner lens covers the lens (22).

7. The lamp unit for a vehicle according to claim 1 or 2,
wherein the optical unit (12) comprises an extension portion (1222) extending on a lens side with respect to the end, and
wherein the lens (22) is disposed between the end and the extension portion.

8. The lamp unit for a vehicle according to claim 1 or 2,
wherein the first lamp (1) comprises a first control unit (13) configured to control the first light source portion (11) such that the first light source portion is turned on and off in a first cycle,
wherein the second lamp (2) comprises a second control unit (23) configured to control the second light source portion (21) such that the second light source portion is turned on and off in a second cycle by sequentially turning on a plurality of light sources provided in the second light source portion at predetermined intervals, and
wherein the first cycle and the second cycle are the same.

## Patentansprüche

1. Lampeneinheit (10; 10B; 10C) für ein Fahrzeug, umfassend:
eine erste Lampe (1; 1B; 1C), umfassend einen ersten Lichtquellenabschnitt (11) und eine optische Einheit (12), die optische Einheit (12) umfassend eine Lichtleiteinheit (122); und
eine zweite Lampe (2; 2B; 2C), umfassend: einen zweiten Lichtquellenabschnitt (21) und eine Projektionslinse (22), wobei die zweite Lampe konfiguriert ist, um über die Projektionslinse (22) ein Lichtmuster mit einem vorbestimmten Bild auf eine Straßenoberfläche zu zeichnen,
wobei die Lampeneinheit **dadurch gekennzeichnet ist, dass**:
zumindest ein Teil der zweiten Lampe konfiguriert ist, um eingeschaltet zu werden, wenn der erste Lichtquellenabschnitt (11) eingeschaltet wird;
wobei die Projektionslinse (22) bereitgestellt ist, um ein Ende der optischen Einheit (12) zu berühren, und
wobei ein Abschnitt der Lichtleiteinheit (122) der optischen Einheit (12), der Abschnitt der Lichtleiteinheit (122) der optischen Einheit (12), der die Linse berührt, mit einem Lichteinlassabschnitt (1220) versehen ist, der konfiguriert ist, um zu bewirken, dass Licht, das von dem zweiten Lichtquellenabschnitt über die Projektionslinse (22) emittiert wird, auf die Lichtleiteinheit (122) der optischen Einheit (12) einfällt.

2. Lampeneinheit für ein Fahrzeug nach Anspruch 1,
wobei sich die optische Einheit (12) entlang einer virtuellen Linie (V1) erstreckt, die sich in einer Vorderansicht in einer Erstreckungsrichtung der ersten Lampe erstreckt, und
wobei sich die Linse (22) auf der virtuellen Linie befindet.

3. Lampeneinheit für ein Fahrzeug nach Anspruch 1 oder 2,
wobei das Ende (122b, 122c) der optischen Einheit (12) eine Form aufweist, die mit der Linse (22) nahtlos durchgängig oder damit verändert ist.

4. Lampeneinheit für ein Fahrzeug nach Anspruch 1 oder 2,
wobei die optische Einheit (12) in der Vorderansicht zumindest einen Teil eines äußeren Umfangsrands der Linse (22) abdeckt.

5. Lampeneinheit für ein Fahrzeug nach Anspruch 1 oder 2,
wobei die optische Einheit (12) eine Lichtleiteinheit (122) umfasst und wobei der Lichteinlassabschnitt (1220) in der Lichtleiteinheit bereitgestellt ist.

6. Lampeneinheit für ein Fahrzeug nach Anspruch 1 oder 2,
wobei die optische Einheit (12) eine innere Linse (123) umfasst, und wobei die innere Linse die Linse (22) abdeckt.

7. Lampeneinheit für ein Fahrzeug nach Anspruch 1 oder 2,
wobei die optische Einheit (12) einen Verlängerungsabschnitt (1222) umfasst, der sich an einer Linsenseite in Bezug auf das Ende erstreckt, und
wobei die Linse (22) zwischen dem Ende und dem Verlängerungsabschnitt angeordnet ist.

8. Lampeneinheit für ein Fahrzeug nach Anspruch 1 oder 2,
wobei die erste Lampe (1) eine erste Steuereinheit (13) umfasst, die konfiguriert ist, um den ersten Lichtquellenabschnitt (11) zu steuern, sodass der erste Lichtquellenabschnitt in einem ersten Zyklus ein- und ausgeschaltet wird,
wobei die zweite Lampe (2) eine zweite Steuereinheit (23) umfasst, die konfiguriert ist, um den zweiten Lichtquellenabschnitt (21) zu steuern, sodass der zweite Lichtquellenabschnitt in einem zweiten Zyklus ein- und ausgeschaltet wird, indem eine Vielzahl von Lichtquellen, die in dem zweiten Lichtquellenabschnitt bereitgestellt sind, in vorbestimmten Intervallen nacheinander eingeschaltet werden, und
wobei der erste Zyklus und der zweite Zyklus gleich sind.

## Revendications

1. Unité de lampe (10 ; 10B ; 10C) destinée à un véhicule comprenant :
une première lampe (1 ; 1B ; 1C) comprenant une première partie de source de lumière (11) et une unité optique (12), l'unité optique (12) comprenant une unité de guidage de lumière (122) ; et
une deuxième lampe (2 ; 2B ; 2C) comprenant : une deuxième partie de source de lumière (21), et une lentille de projection (22), la deuxième lampe étant configurée pour dessiner, via la lentille de projection (22), un motif lumineux avec une image prédéterminée sur une surface de route,
l'unité de lampe étant **caractérisée en ce que** :
au moins une partie de la deuxième lampe est configurée pour être allumée lorsque la première partie de source de lumière (11) est allumée ;
dans laquelle la lentille de projection (22) est prévue pour entrer en contact avec une extrémité de l'unité optique (12), et
dans laquelle une partie de l'unité de guidage de lumière (122) de l'unité optique (12), la partie de l'unité de guidage de lumière (122) de l'unité optique (12) en contact avec la lentille, est équipée d'une partie d'entrée de lumière (1220) configurée pour permettre à la lumière émise par la deuxième partie de source de lumière via la lentille de projection (22) d'être incidente sur l'unité de guidage de lumière (122) de l'unité optique (12).

2. Unité de lampe destinée à un véhicule selon la revendication 1,
dans laquelle l'unité optique (12) s'étend le long d'une ligne virtuelle (V1) qui s'étend dans une direction d'extension de la première lampe sur une vue de devant, et
dans laquelle la lentille (22) se trouve sur la ligne virtuelle.

3. Unité de lampe destinée à un véhicule selon la revendication 1 ou 2,
dans laquelle l'extrémité (122b, 122c) de l'unité optique (12) présente une forme qui est continue de manière régulière ou qui change avec la lentille (22).

4. Unité de lampe destinée à un véhicule selon la revendication 1 ou 2,
dans laquelle l'unité optique (12) recouvre au moins une partie d'un bord périphérique externe de la lentille (22) sur la vue de devant.

5. Unité de lampe destinée à un véhicule selon la revendication 1 ou 2,
dans laquelle l'unité optique (12) comprend une unité de guidage de lumière (122), et
dans laquelle la partie d'entrée de lumière (1220) est prévue dans l'unité de guidage de lumière.

6. Unité de lampe destinée à un véhicule selon la revendication 1 ou 2,
dans laquelle l'unité optique (12) comprend une lentille interne (123), et
dans laquelle la lentille interne recouvre la lentille (22).

7. Unité de lampe destinée à un véhicule selon la revendication 1 ou 2,
dans laquelle l'unité optique (12) comprend une partie d'extension (1222) qui s'étend sur un côté de la lentille par rapport à l'extrémité, et
dans laquelle la lentille (22) est disposée entre l'extrémité et la partie d'extension.

8. Unité de lampe destinée à un véhicule selon la revendication 1 ou 2,
dans laquelle la première lampe (1) comprend une première unité de commande (13) configurée pour contrôler la première partie de source de lumière (11) de sorte que la première partie de source de lumière soit allumée et éteinte pendant un premier cycle,
dans laquelle la deuxième lampe (2) comprend une deuxième unité de commande (23) configurée pour contrôler la deuxième partie de source de lumière (21) de sorte que la deuxième partie de source de lumière soit allumée et éteinte pendant un deuxième cycle en allumant successivement une pluralité de sources de lumière prévues dans la deuxième partie de source de lumière à des intervalles prédéterminés, et
dans laquelle le premier cycle et le deuxième cycle sont les mêmes.
